# EUROPEAN PATENT SPECIFICATION

(11) **EP 0 713 826 B1**
(45) Date of publication and mention of the grant of the patent: **28.06.2000**
(21) Application number: 95203041.9
(22) Date of filing: 08.11.1995
(51) Int. Cl.: B64C 25/50

(54) **Landing gear axle steering**
Lenkvorrichtung einer Fahrwerkradachse
Système d'orientation d'un essieu de train d'atterissage

(30) Priority: 22.11.1994 US 343812
(43) Date of publication of application: 29.05.1996
(73) Proprietor: THE BOEING COMPANY, Seattle, Washington 98108 (US)
(72) Inventor: Meneghetti, Michael J., Seattle, Washington 98124-2207 (US)
(74) Representative: Bartelds, Erik

(56) References cited:
- FR-A- 1 544 174
- US-A- 2 943 820
- US-A- 5 242 131

## Description

The present invention relates to a landing gear truck assembly for mounting to a strut, comprising a bogie beam carrying at least two wheel axles, extending substantially horizontally perpendicular to said beam, at least one of said wheel axles being fixed to said beam and at least another one of said wheel axles being pivotally mounted on said beam about a substantially vertical pivot axis, and at least one actuator being connected to said beam and said pivotable wheel axle for pivoting said pivotable axle.

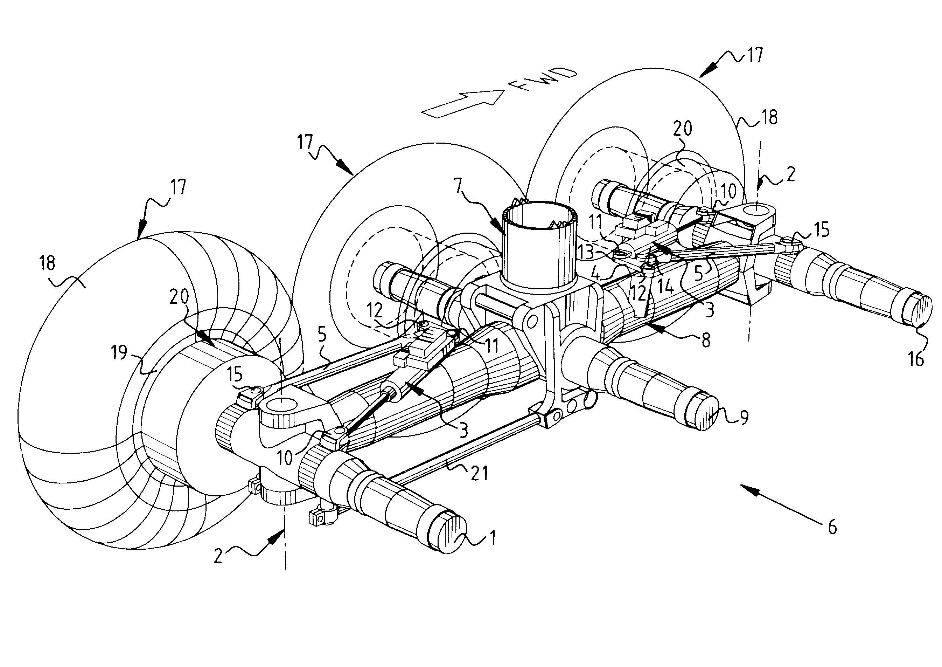

A typical six wheel truck assembly is shown in Figure 1 of U.S. Patent No. 5,242,131 to Watts issued September 7, 1993 and also assigned to the Boeing Company, the details of which are incorporated herein by reference.

Large aircraft, for example wide-body aircraft, typically employ multi-wheel landing gear or landing gear trucks which may be steerable to some degree when the aircraft is taxiing on the ground. The aircraft is usually provided with a steerable nose wheel or nose wheel landing gear and a plurality of main landing gear trucks adapted to cooperate with the nose wheel landing gear in executing a turn. If the main landing gear trucks merely comprise fixed wheel axles, the turning point will usually be the point where the transvers axis of the nose wheel and the central transverse axis of the two main wheel trucks intersect. As the fixed wheel axles of the truck will not all be in the direction of the turning point, tires on those axles will execute a sliding movement over the ground, resulting in scrubbing of the tires and thus increased tire wear and reduced tire life. Various attempts have already been made to counter this phenomenon.

Watts, U.S. Patent No. 5,242,131 titled "Steerable Landing Gear", is illustrative of an attempt to reduce landing gear turning forces on an airplane with a six wheel, three axle truck. Tire scrubbing, and hence tire wear, is reduced by a steerable axle on either the rear, the forward or both forward and rear positions on the truck. The axle is operated by two hydraulic actuators proportionally controlled by the nose gear steering system. Although the steerable landing gear disclosed in this earlier patent is successful in reducing tire scrub and wear, it has various drawbacks. The fact that a pair of hydraulic actuators is used for pivoting each wheel axle for instance, results in a fairly complicated and rather heavy structure. Furthermore, these hydraulic actuators are arranged on the rearmost, or in case of a forward steerable axle foremost position on the truck, beyond a vertical plane through the corresponding wheel axle. This position does not allow conventional towing and jacking attachments to be used. Furthermore, the total length of the truck is thus increased.

In US-A-2,943,820 a tandem landing gear truck is disclosed having a fixed front axle and a pivotable rear axle. The rear axle is freely pivotable when unlocked, and will follow the direction of the steerable nose gear. The tandem truck includes means for locking the pivotable rear axis in its center position when the landing gear is being retracted. The truck further includes a single actuator for releasing the locking means. The actuator does not effect pivoting of the rear axle.

A similar arrangement is shown in FR-A-1 544 174. In this prior art document however, the single actuator serves to reset the pivotable axle to its center position before retraction of the landing gear.

Further exemplary prior art includes U.S. Patent No. 2,538,388 to Sievers and U.S. Patent No. 3,091,416 to Knight et al. which are intended to position a main landing gear for cross-wind landing operations. U.S. Patent No. 2,538,388 also has a steering function but requires an externally driven torque shaft, internal to the shock strut, powering a spur gear on the underside of the truck beam. This gear engages with exposed gearing and link mechanisms to steer multiple wheel pairs. U.S. Patent No. 2,851,231 to Wescott is limited to a tandem wheel configuration. The forward truck beam 17 is connected directly to the airplane by torque links 27. The rear truck beam 16 is integral to the shock absorber inner cylinder and is free to caster during steering maneuvers. It is aligned (for retraction) by an inner cylinder cam 44 engaging a centering cam 43, when the shock strut extends fully on takeoff. U.S. Patent No. 3,904,153 to Watts also assigned to the Boeing Company defines an entire nose landing gear with mechanisms for gear actuation, locking and steering.

The present invention has for its object to provide a landing gear truck assembly of the general type disclosed in the above mentioned U.S. Patent No. 5,242,131, which is compact and lightweight, and which does not compromise airplane towing or jacking. In accordance with the present invention, this is accomplished in a landing gear truck assembly as disclosed in the preamble of claim 1, in that only a single actuator is connected to said beam and said pivotable wheel axle, said only a single actuator is connected to said beam and said pivotable wheel axle said actuator having one end pivotally mounted on a first half of said pivotable wheel axle extending on a first side of said vertical pivot axis and another end mounted on a walking beam that is pivotally mounted on said bogie beam, said walking beam further being connected to a second half of said pivotable wheel axle extending on a second side of said vertical pivot axis opposite said first half though a follower link. By using only a single actuator, the dimensions and weight of the truck assembly are minimized. Furthermore, by using a walking beam arrangement with a follower link, the turning moment provided by the single actuator is amplified.

In a preferred embodiment, the actuator is disposed between the pivotable wheel axle and the fixed wheel axle. By providing attachment of hydraulic components between the axle vertical plane and the strut in this way undesirable induced dynamic response is prevented.

The foregoing object and many of the attendant advantages of this invention will become more readily appreciated as the same becomes better understood by reference to the following detailed description when taken in conjunction with the accompanying drawings wherein the figure is illustrative of an isometric view of the left hand gear of a six wheel truck assembly having steerable forward and aft wheel axles.

A landing gear truck assembly 6 is shown in the figure mounted to a strut 7, of which only part of the piston of the shock absorbing mechanism is illustrated. The truck assembly 6 comprises a bogie beam 8, which carries a forward wheel axle 16, a central wheel axle 9 and a rear wheel axle 1. The central wheel axle 9 is fixed to the bogie beam 8, whereas both the forward and the rear wheel axles 16, 1 are pivotable about respective vertical pivot shafts 2. Each wheel axle carries dual wheel assemblies 17 in conventional manner, with only one wheel assembly 17 of each axle being shown. Each wheel assembly 17 comprises a tire 18 mounted on a hub 19 and a brake 20 connected to said hub. A brake rod 21 connects the brake 20 to the lower part of the strut 7 for transferring brake torque.

The movement of both the forward and rear pivotable wheel axles 16, 1 about their corresponding vertical shaft 2 is provided by a single actuator 3 for each wheel axle. Each actuator 3 has one end 10 pivotally mounted on a first half of its corresponding wheel axle 1, 16 (the right half of the rear wheel axle 1, and the left half of the front wheel axle 16, respectively), and another end 11 mounted on a walking beam 4. Walking beam 4 is comprised of a bell crank which is pivotally mounted with its first end 12 on the bogie beam 8, with the pivot center line being offset. The second end 13 of the bell crank 4 is connected to the actuator 3, and between said first and second ends 12, 13 a follower link 5 is connected with a first end 14 to the bell crank 4. The second end 15 of the follower link 5 is connected to a second half of the corresponding wheel axle 1, 16 (the left half of the rear wheel axle 1, and the right half of the front wheel axle 16, respectively). The geometry is such that the actuator 3 provides the power to simultaneously drive the wheel axle 1, 16 about its vertical shaft 2 and the bell crank 4 about its pivot center line. Because of the way the follower link 5 is attached between the bell crank 4 and the wheel axle 1, 16, its reaction load provides an additional turning moment about the vertical shaft 2 to the turning moment provided by the actuator 3.

In addition to steering, the functional requirements of this mechanism include a necessity of locking the pivotable wheel axles 1, 16 when steering is not being used, such as during take-off and landing of the aircraft. In the above mentioned U.S. Patent No. 5,242,131 this function was provided by a separate, external, hydraulic plunger lock mechanism. The present system replaces the plunger lock mechanism with the steering actuator 3 itself having this function integrated therein.

## Claims

1. Landing gear truck assembly (6) for mounting to a strut (7) comprising a bogie beam (8) carrying at least two wheel axles (1, 9, 16) extending substantially horizontally perpendicular to said beam (8), at least one (9) of said wheel axles (1, 9, 16) being fixed to said beam (8) and at least another one (1, 16) of said wheel axles (1, 9, 16) being pivotally mounted on said beam (8) about a substantially vertical pivot axis (2), and at least one actuator (3) being connected to said beam (8) and said pivotable wheel axle (1, 16) for pivoting said pivotable wheel axle (1,16), **characterized in that** only a single actuator (3) is connected to said beam (8) and said pivotable wheel axle (1, 16), said actuator (3) having one end (10) pivotally mounted on a first half of said pivotable wheel axle (1, 16) extending on a first side of said vertical pivot axis (2) and another end (11) mounted on a walking beam (4) that is pivotally mounted on said bogie beam (8), said walking beam (4) further being connected to a second half of said pivotable wheel axle (1, 16) extending on a second side of said vertical pivot axis (2) opposite said first half though a follower link (5).

2. Truck assembly (6) as claimed in claim 1, **characterized in that** said actuator (3) is disposed between said pivotable wheel axle (1, 16) and said fixed wheel axle (9).

3. Truck assembly (6) as claimed in claim 1 or 2, **characterized in that** said walking beam (4) has a first end (12) pivotally mounted on said bogie beam (8) and a second end (13) carrying the actuator (3), and in that between said first and second ends (12, 13) a first end (14) of said follower link (5) is pivotally connected to said walking beam (4), a second end (15) of said follower link (5) being pivotally connected to said second half of siad pivotable wheel axle (1,16).

4. Truck assembly (6) as claimed in claim 3, **characterized in that** said first end (12) of said walking beam (4) is mounted on said bogie beam (8) with its pivot center line offset.

5. Truck assembly (6) as claimed in any one of the preceding claims, **characterized in that** said actuator (3) comprises means for locking the actuator (3) in a predetermined position.

6. Truck assembly (6) as claimed in claim 5, **characterized in that** said locking means are arranged for locking said actuator (3) at its center stroke.

7. Truck assembly (6) as claimed in any one of the preceding claims, **characterized in that** said bogie beam (8) carries at least three wheel axles (1, 9, 16), at least two (1, 16) of which are pivotally mounted to said beam (8), said fixed wheel axle (9) being disposed between said pivotable wheel axles (1, 16) adjacent said strut (7).

## Patentansprüche

1. Flugzeug-Fahrgestell-Anordnung (6) zur Anbringung an einem Federbein (7) mit einem Pendelbalken (8), an dem wenigstens zwei Radachsen (1,9,16) angebracht sind, welche sich im wesentlichen in horizontaler Richtung senkrecht zu dem Pendelbalken (8) erstrecken, wobei wenigstens eine (9) der Radachsen (1,9,16) an dem Pendelbalken (8) angebracht ist und wenigstens eine weitere (1,16) der Radachsen (1,9,16) um eine im wesentlichen vertikale Schwenkwelle (2) schwenkbar an dem Pendelbalken (8) angebracht ist, und wobei wenigstens ein Stellantrieb (3) an dem Pendelbalken (8) und einer schwenkbaren Radachse (1,16) angebracht ist, um eine Schwenkbewegung der entsprechenden schwenkbaren Radachse (1,16) herbeizuführen,
dadurch **gekennzeichnet**, daß nur ein einziger Stellantrieb (3) mit dem Pendelbalken (8) und der schwenkbaren Radachse (1,16) verbunden ist, daß das eine Ende (10) des Stellantriebes (3) schwenkbar auf einer ersten Hälfte der schwenkbaren Radachse (1,16) angeordnet ist, welche sich auf einer ersten Seite der vertikalen Schwenkwelle (2) erstreckt, und daß ein anderes Ende (11) auf einer Tandem-Schwinge (4) angeordnet ist, die ihrerseits schwenkbar auf dem Pendelbalken (8) angebracht ist, und daß die Tandem-Schwinge (4) weiterhin mit einer zweiten Hälfte der schwenkbaren Radachse (1,16) verbunden ist, welche sich auf einer zweiten Seite der vertikalen Schwenkwelle (2) gegenüber von der ersten Hälfte durch eine Mitnehmerverbindung (5) erstreckt.

2. Fahrgestell-Anordnung (6) nach Anspruch 1,
dadurch **gekennzeichnet**, daß der Stellantrieb (3) zwischen der schwenkbaren Radachse (1,16) und der festen Radachse (9) angeordnet ist.

3. Fahrgestell-Anordnung (6) nach Anspruch 1 oder 2,
dadurch **gekennzeichnet**, daß die Tandem-Schwinge (4) ein erstes Ende (12) aufweist, welches schwenkbar auf dem Pendelbalken (8) angeordnet ist, daß die Tandem-Schwinge (4) weiterhin ein zweites Ende (13) hat, welches den Stellantrieb (3) trägt, und das zwischen dem ersten (12) und dem zweiten (13) Ende ein erstes Ende (14) der Mitnehmerverbindung (5) schwenkbar mit der Tandem-Schwinge (4) verbunden ist, während ein zweites Ende (15) der Mitnehmerverbindung (5) schwenkbar mit der zweiten Hälfte der schwenkbaren Radachse (1,16) verbunden ist.

4. Fahrgestell-Anordnung (6) nach Anspruch 3,
dadurch **gekennzeichnet**, daß das erste Ende (12) der Tandem-Schwinge (4) auf dem Pendelbalken (8) angebracht ist, wobei die Schwenkmittellinie versetzt ist.

5. Fahrgestell-Anordnung (6) nach einem der vorhergehenden Ansprüche,
dadurch **gekennzeichnet**, daß der Stellantrieb (3) eine Einrichtung zur Verriegelung des Stellantriebes (3) in einer vorgegebenen Stellung aufweist.

6. Fahrgestell-Anordnung (6) nach Anspruch 5,
dadurch **gekennzeichnet**, daß die Verriegelungseinrichtung derart ausgebildet ist, daß sie den Stellantrieb (3) in einer Mittelstellung verriegelt.

7. Fahrgestell-Anordnung (6) nach einem der vorhergehenden Ansprüche,
dadurch **gekennzeichnet**, daß der Pendelbalken (8) wenigstens drei Radachsen (1,9,16) trägt, von denen wenigstens zwei (1,16) schwenkbar an dem Pendelbalken (8) angeordnet sind, während die feste Radachse (9) zwischen den schwenkbaren Radachsen (1,16) im Bereich des Federbeins (7) angeordnet ist.

## Revendications

1. Ensemble de train d'atterrissage (6) pour montage sur une jambe (7), comportant un balancier de bogie (8) portant au moins deux essieux de roue (1, 9, 16) s'étendant sensiblement horizontalement perpendiculairement audit balancier (8), au moins un (9) desdits essieux de roue (1, 9, 16) étant fixé sur ledit balancier (8) et au moins un autre (1, 16) desdits essieux de roue (1, 9, 16) étant monté de façon pivotante sur ledit balancier (8) autour d'un axe de pivot sensiblement vertical (2), et au moins un dispositif d'actionnement (3) étant relié audit balancier (8) et audit essieu de roue pivotant (1, 16) afin de faire pivoter ledit essieu de roue pivotant (1, 16), caractérisé en ce que seul un unique dispositif d'actionnement (3) est relié audit balancier (8) et audit essieu de roue pivotant (1, 16), ledit dispositif d'actionnement (3) ayant une extrémité (10) montée de façon pivotante sur une première moitié dudit essieu de roue pivotant (1, 16) s'étendant sur un premier côté dudit axe de pivot vertical (2) et une autre extrémité (11) montée sur un basculeur (4) qui est montée de façon pivotante sur ledit balancier de bogie (8), ledit basculeur (4) étant en outre relié à une deuxième moitié dudit essieu de roue pivotant (1, 16) s'étendant sur un deuxième côté dudit axe de pivot vertical (2) opposé à ladite première moitié grâce à une bielle (5).

2. Ensemble de train (6) selon la revendication 1, caractérisé en ce que le dispositif d'actionnement est disposé entre l'essieu de roue pivotant et l'essieu de roue fixe.

3. Ensemble de train (6) selon la revendication 1 ou 2, caractérisé en ce que ledit basculeur (4) a une première extrémité (12) montée de façon pivotante sur ledit balancier de bogie (8) et une deuxième extrémité (13) portant le dispositif d'actionnement (3), et en ce que, entre lesdites première et deuxième extrémités (12, 13), une première extrémité (14) de ladite bielle (5) est reliée de façon pivotante audit basculeur (4), une deuxième extrémité (15) de ladite bielle (5) étant reliée de façon pivotante à ladite deuxième moitié dudit essieu de roue pivotant (1, 16).

4. Ensemble de train (6) selon la revendication 3, caractérisé en ce que ladite première extrémité (12) dudit basculeur (4) est montée sur ledit balancier de bogie (8) avec son axe de pivot décalé.

5. Ensemble de train (6) selon l'une quelconque des revendications précédentes, caractérisé en ce que ledit dispositif d'actionnement (3) comporte des moyens destinés à bloquer le dispositif d'actionnement (3) dans une position prédéterminée.

6. Ensemble de train (6) selon la revendication 5, caractérisé en ce que lesdits moyens de blocage sont prévus pour bloquer ledit dispositif d'actionnement (3) au niveau de sa course centrale.

7. Ensemble de train (6) selon l'une quelconque des revendications précédentes, caractérisé en ce que ledit balancier de bogie (8) porte au moins trois essieux de roue (1, 9, 16), dont au moins deux sont montés de façon pivotante sur ledit balancier (8), ledit essieu de roue fixe (9) étant disposé entre lesdits essieux de roue pivotants (1, 16) de façon adjacente à ladite jambe (7).
